Europäisches Patentamt

European Patent Office

Office européen des brevets

(19)

(11) Veröffentlichungsnummer: **0 099 448**

**A1**

(12) **EUROPÄISCHE PATENTANMELDUNG**

(21) Anmeldenummer: 83103934.2

(22) Anmeldetag: 22.04.83

(51) Int. Cl.³: **C 09 J 7/04**
C 09 J 5/06, G 09 F 3/10
D 06 H 1/04

(30) Priorität: 23.07.82 DE 3227530

(43) Veröffentlichungstag der Anmeldung:
01.02.84 Patentblatt 84/5

(84) Benannte Vertragsstaaten:
AT BE CH DE FR GB IT LI LU NL SE

(71) Anmelder: Jackstädt GmbH
Bembergstrasse 2
D-5600 Wuppertal 1(DE)

(72) Erfinder: Litke, Leopold
Dahler Berg 62
D-5600 Wuppertal 22(DE)

(74) Vertreter: Rieder, Hans-Joachim, Dr. et al,
Corneliusstrasse 45
D-5600 Wuppertal 11(DE)

(54) In Form eines Schildes, Etiketts oder dergleichen ausgebildeter Selbstklebestreifen.

(57) Die Erfindung betrifft einen in Form eines Schildes, eines Etiketts oder dergleichen ausgebildeten Selbstklebestreifen (1), mit Schutzabdeckung (3) und einer durch Wärmebehandlung zur irreversiblen Haftung, insbesondere auf Textilien, bringbaren Selbstklebeschicht (2), und schlägt zur Erzielung einer hoch haftfähigen, wasch- und reinigungsmittelresistenten Ausbildung eines solchen Selbstklebestreifens vor, daß die Selbstklebeschicht (2) in gleichmäßiger Verteilung pulverförmige Thermoplaste (4) in einer Menge von 5-60%, bezogen auf den Feststoffgehalt, enthält. Diese Ausgestaltung führt auch zu einer optimalen Lagerfähigkeit.

EP 0 099 448 A1

## In Form eines Schildes, Etiketts oder dergleichen ausgebildeter Selbstklebestreifen

Die Erfindung betrifft einen in Form eines Schildes, Etiketts oder dergleichen aus gebildeten Selbstklebestreifen mit Schutzabdeckung und einer durch Wärmebehandlung zur irreversiblen Haftung, insbesondere auf Textilien, bringbarer Selbstklebeschicht.

Bei den bekannten Selbstklebeartikeln dieser Art wird die durch Wärmebehandlung erreichbare irreversible Haftung über eine Vernetzung der Selbstklebemasse erzielt. Auf diese Weise läßt sich zwar eine einigermaßen waschfeste Verbindung, bspw. zwischen Textilauszeichnungsetiketten und dem beklebten Textilgut erreichen. Die Klebeverbindung ist jedoch nicht dauerhaft und nicht stets genügend fest; sie ist auch nicht beständig gegen die in chemischen Reinigungsanstalten Verwendung findenden Lösungsmittel. Auch ist die Lagerfähigkeit selbst unter optimalen Bedingungen begrenzt, weil sich bei längerem Lagern eine Selbst-Vernetzung des Klebstoffes nicht völlig ausschließen läßt.

Die Erfindung hat sich die Aufgabe gestellt, einen gattungsgemäße Selbstklebestreifen so auszugestalten, daß bei einfacher preisgünstiger Herstellung und optimaler Lagerfähigkeit eine sehr feste und reinigungsmittelstabile Haftung erzielt ist, wenn nach dem Aufkleben, insbesondere auf Textilien, eine Wärmebehandlung mit gleichzeitiger Druckeinwirkung stattfindet, bspw. durch Bügeln.

Erreicht ist dies erfindungsgemäß dadurch, daß die Selbstkleberschicht in gleichmäßiger Verteilung pulverförmige Thermoplaste in einer Menge von 5-60 %, bezogen auf den Feststoffgehalt, enthält. Als pulverförmige Thermoplaste eignen sich dabei erfindungsgemäß vorzugsweise Polyolefine, Polyester oder Polyamide; dies insbesondere, wenn der Streifen aus einem Gewebe, insbesondere Baumwollgewebe, besteht.

Zur Herstellung entsprechender Selbstklebefolien wird dabei eine Selbstklebemasse verwendet, welche erfindungsgemäß von vorneherein, d. h. vor der Beschichtung auf die Selbstklebefolie, einen Anteil von 5-60 % an pulverförmigen Thermoplasten aufweist.

Zufolge dieser Lösung ist eine Selbstklebemasse bzw. ein hiermit beschichteter Selbstklebestreifen verwirklicht, welcher insofern einfach und preisgünstig herstellbar ist, als von den üblichen geeigneten Selbstklebemassen-Zusammensetzungen ausgegangen werden kann. Die pulverförmigen Thermoplaste wirken nicht nur im Sinne streckender Füllstoffe, sondern haben gleichzeitig noch die Funktion, bei einer etwaigen Wärmebehandlung mit Druckeinwirkung, nach dem Aufkleben des Selbstklebestreifens auf einen Untergrund, wie bspw. ein Textilgut, eine irreversible Haftung herbeizuführen. Dies geschieht bspw. durch Überfahren des Selbstklebestreifens mit einem heißen Bügeleisen. Bis zum Zeitpunkt einer solchen gezielten Wärmeeinwirkung haftet das Etikett repositionierbar auf dem Untergrund. Da die pulverförmigen Thermoplaste mit den üblichen Mischungskomponenten der Selbstklebemasse keine Reaktion eingehen, findet auch keine vorhergehende Vernetzung oder dergleichen statt. Es ist demgemäß eine lange Lagerfähigkeit gegeben. Zudem tritt noch der Vorteil auf, daß bei einer Wärmeeinwirkung oberhalb des Schmelzpunktes der pulverförmigen Thermoplaste ein beschädigungsfreies Ablösen vom Untergrund stattfinden kann. Die Klebeverbindung ist beständig gegen Waschvorgänge im Bereich der üblichen Waschtemperaturen und hält auch Reinigungsprozessen stand, bspw. auch solchen, die in Gegenwart von Perchloräthylen oder Benzin vollzogen werden.

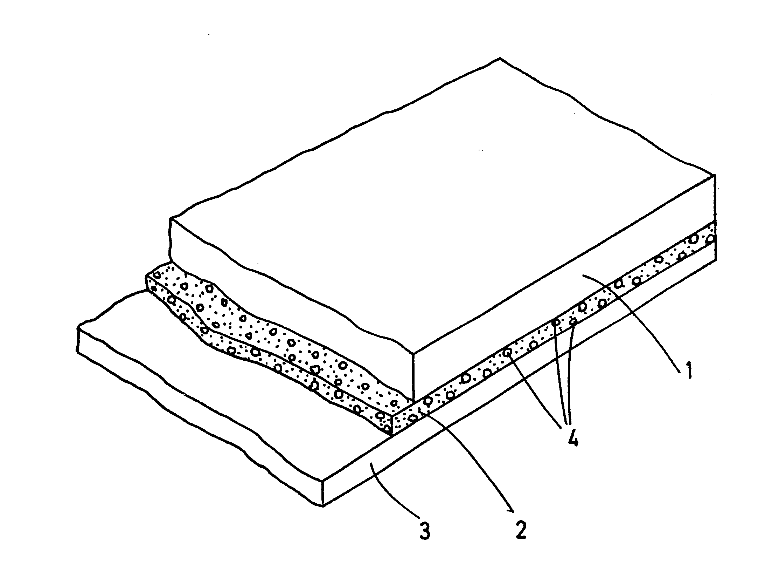

Der Gegenstand der Erfindung ist auf der beiliegenden Zeichnung veranschaulicht:

Der mit 1 bezeichnete Selbstklebestreifen, bestehend aus einem Baumwollgewebe, trägt auf seiner Rückseite die Selbstklebemasse 2, welche überdeckt ist von der Schutzabdeckung 3, vorzugsweise in Form eines mindestens einseitig silikonisierten Papieres. Innerhalb dieser Selbstklebeschicht befinden sich in gleichmäßiger Verteilung die pulverförmigen Thermoplaste 4 etwa in einer Menge von 5-60 %, bezogen auf den Feststoffgehalt. Der Prozentanteil richtet sich im wesentlichen nach der durch Wärmebehandlung angestrebten irreversiblen Haftungskraft.

Bei der Verwendung des Selbstklebestreifens, bspw. in Form eines Textilienauszeichnungsschildes für Reinigungszwecke, wird die Schutzabdeckung 3 entfernt; anschließend das Schild auf den textilen Untergrund, welcher ausgezeichnet werden soll, aufgeklebt. Die Selbstklebemasse als solche bringt eine erste Haftung. Es verbleibt aber eine Repositionierbarkeit des Schildes. Soll diese Abziehbarkeit der Selbstklebefolie beseitigt werden, so unterwirft man die Außenseite des Streifens 1, bspw. durch Bügeln mit einem heißen Bügeleisen, einer entsprechenden Wärmebehandlung plus gleichzeitiger Druckeinwirkung. Dies erweicht die pulverförmigen Thermoplastkörper 4, die dadurch eine Klebeverbindung mit dem textilen Untergrund eingehen.

Je nach Auswahl der Materialien für die pulverförmigen Thermoplaste läßt sich dabei gleichzeitig noch erreichen daß zum Beispiel eine Waschtemperatur oberhalb von 95° zu einem erneuten Erweichen der Thermoplaste führt, was zu einem beschädigungsfreien Ablösen herangezogen werden kann.

Auf merceriertem groben Baumwollgewebe wurden die nachfolgend aufgeführten Klebekraftwerte von aufgeklebten Schildern, die ebenfalls aus mercerierter Baumwolle hergestellt waren, gemessen. Der Klebstoffauftrag lag bei 50 g/m$^2$.

4

Die Prüfungen erfolgten nach einer Methode, angelehnt an DIN 30646,

A. Haftklebstoff ohne thermoplastische Füllstoffe,

<u>zum Beispiel</u> 87 % Solucryl 154,

13 % Bayer-Weichmacher CEL,

B. Haftklebstoff gemäß der vorliegenden Erfindung,

<u>zum Beispiel</u> 81,0 % Solucryl 154,

12,2 % Bayer-Weichmacher CEL,

6,8 % GRILESTA 6506.

1. Klebkraft, aufgeklebt ohne Bügeln

2. Klebkraft, aufgeklebt gebügelt bei ca. 170° C, 30 Sekunden,

3. Klebkraft, aufgeklebt, anschließend 60 Minuten behandelt in Perchloräthylen,

4. Klebkraft, aufgeklebt, anschließend 60 Minuten behandelt; Benzin, Siedebereich 100-140° C,

5. Klebkraft, aufgeklebt, anschließend 60 Minuten behandelt; Tetrachlorkohlenstoff,

6. Klebkraft, aufgeklebt, anschließend 60° C-Waschgang in einer Haushaltswaschmaschine mit Waschmittelzusatz,

7. Klebkraft, aufgeklebt, 95° C-Waschgang usw.

| <u>Meßergebnisse</u> | N/25 mm | |
| --- | --- | --- |
| | <u>A</u> | <u>B</u> |
| 1 | 0,9 | 0,2 |
| 2 | 5,8 | 8,2 |
| 3 | 1,9 | 3,5 |
| 4 | 2,4 | 5,9 |
| 5 | 2,0 | 3,4 |
| 6 | 2,0 | 2,2 |
| 7 | 1,0 | 1,1 |

Der erfindungsgemäße Streifen kann auch eingesetzt werden auf anderen Gebieten als dem der Auszeichnungsschilder, zum Beispiel in der

5

textilen Gürtelfertigung, wo eine Gürtel-Einlage von einem Stoffstreifen umkleidet wird.

Alle in der Beschreibung erwähnten und in der Zeichnung dargestellten neuen Merkmale sind erfindungswesentlich, auch soweit sie in den Ansprüchen nicht ausdrücklich beansprucht sind.

# Patentansprüche

1. In Form eines Schildes, eines Etiketts oder dergleichen ausgebildeter Selbstklebestreifen, mit Schutzabdeckung und einer durch Wärmebehandlung zur irreversiblen Haftung, insbesondere auf Textilien, bringbarer Selbstklebeschicht, dadurch gekennzeichnet, daß die Selbstkleberschicht (2) in gleichmäßiger Verteilung pulverförmige Thermoplaste (4) in einer Menge von 5-60 %, bezogen auf den Feststoffgehalt, enthält.

2. Selbstklebestreifen nach Anspruch 1, dadurch gekennzeichnet, daß der Selbstklebestreifen aus Gewebe besteht und die Selbstklebeschicht Polyolefine, Polyester oder Polyamide als pulverförmige Thermoplaste enthält.

3. Selbstklebemasse zur Herstellung von Selbstklebefolien nach Anspruch 1, gekennzeichnet durch einen Anteil von 5-60 % an pulverförmigen Thermoplasten.

**Europäisches Patentamt**

**EUROPÄISCHER RECHERCHENBERICHT**

## EINSCHLÄGIGE DOKUMENTE

EP 83103934.2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE - A1 - 2 737 828 (HANS NESCHEN) <br> * Seite 4, Zeile 14 - Seite 6, Zeile 27; Ansprüche 1,7 * <br> -- | 1-3 | C 09 J 7/04 <br> C 09 J 5/06 <br> G 09 F 3/10 <br> D 06 H 1/04 |
| A | DE - A1 - 2 937 238 (JOP JOACHIM PREISS GMBH) <br> * Seite 5, Zeilen 14-26; Seite 9, Zeile 17 - Seite 10, Zeile 14; Ansprüche 1,4-8 * <br> -- | 1 | |
| A | DE - A1 - 3 022 744 (FRANZ BARTA KG.) <br> * Seite 6, Zeile 11 - Seite 8, Zeile 8; Seite 9, Zeilen 3-6; Anspruch 1 * <br> -- | 1-3 | |
| X | DE - B2 - 1 956 605 (RADUNER & CO. AG.) <br> * Beispiele 1,2 * <br> ---- | 1-3 | |

**RECHERCHIERTE SACHGEBIETE (Int. Cl. ³)**

C 09 J

D 06 N

D 06 H

D 06 M

G 09 F

Der vorliegende Recherchenbericht wurde für alle Patentansprüche erstellt.

| Recherchenort | Abschlußdatum der Recherche | Prüfer |
|---|---|---|
| WIEN | 12-10-1983 | KAHOVEC |